# EUROPÄISCHE PATENTSCHRIFT

(11) **EP 1 862 248 B1**
(45) Veröffentlichungstag und Bekanntmachung des Hinweises auf die Patenterteilung: **06.01.2010**
(21) Anmeldenummer: 06011578.9
(22) Anmeldetag: 03.06.2006
(51) Int. Cl.: B23K 9/32, B23K 9/173, B23K 9/29

(54) **Vorrichtung zum Verhindern von Verunreinigungen auf einer Bauteiloberfläche benachbart zu einer Schweissnaht durch beim MSG-Schweissen erzeugte Schweissspritzer mit einer relativ zum Schweissbrenner bewegbaren Abschirmung**
Device for avoiding the welding spatters to lay on the surface of the pieces to be welded near the weld seam, with a shielding moveable with respect to the welding torch
Dispositif pour éviter le dépôt de projections de soudage aux alentours du joint de soudage, avec une protection déplaçable par rapport à la torche de soudage

(43) Veröffentlichungstag der Anmeldung: 05.12.2007
(73) Patentinhaber: INPRO Innovationsgesellschaft für fortgeschrittene Produktionssysteme in der Fahrzeugindustrie mbH, 10587 Berlin (DE)
(72) Erfinder: Gigenack, Thomas Dipl.-Ing., 10785 Berlin (DE)
(74) Vertreter: Hoffmann, Klaus-Dieter

(56) Entgegenhaltungen:
- US-A- 1 552 369
- US-A- 1 749 765
- US-A- 2 550 495
- US-A- 2 827 550
- US-A- 4 924 060
- US-A1- 2004 104 203
- US-B1- 6 248 977

## Beschreibung

Die Erfindung betriff eine Schweißanordnung gemäß dem Oberbegriff des Anspruchs 1.

Bei einer aus der US-A- 1 552 369 bekannten derartigen Schweißanordnng, auf die der Oberbegriff des Anspruchs 1 basiert, steht die rohrförmige Abschirmung der Vorrichtung zum Verhindern von Verunreinigungen auf der Bauteiloberfläche in der Einsatzstellung des Schweißbrenners mit ihrem der Bauteiloberfläche zugewandten Ende mit der Bauteiloberfläche neben der Schweißnaht in unmittelbarem Kontakt, um für eine Abdichtung zu sorgen, durch die ein Eindringen von Sauerstoff von außen zu dem zwischen der stromführenden Elektrode und der Bauteiloberfläche brennenden Lichtbogen verhindert werden soll. Entsprechendes gilt für die Position der rohrförmige Abschirmung in Einsatzstellung des Schweißbrenners einer aus der US-A-1 749 765 bekannten ähnlichen Schweißanordnung, bei der an dem der Bauteiloberfläche abgewandten Ende der rohrförmigen Abschirmung eine Zuführung für unter Druck stehendes Schutzgas und am Außenmantel an dem der Bauteiloberfläche zugewandten Ende der rohrförmigen Abschirmung eine mit dieser kommunizierende Kammer mit einer nach außen führenden Absaugleitung ausgebildet ist, um für eine doppelte Abdichtung der rohrförmigen Abschirmung gegen das Eindringen von Luft in die Wärmeeinflußzone an der Schweißnaht zu sorgen. Aus der US-B1- 6 248 977 ist weiterhin bekannt, bei einer MIG-Schweißanordnung zum Schutz gegen das Schweißlicht eine den Schweißbrenner umfassende und sich in der Einsatzstellung des Schweißbrenners über die Brennermündung hinaus bis zur der Bauteiloberfläche erstreckende rohrförmige Abschirmung vorzusehen, die aus einer Vielzahl langgestreckter, mit einander verwebter flexibler Keramikborsten besteht und ein hochtemperaturfestes Schutzschild gegen das Schweißblitzlicht bildet. Bei einer weiteren bekannten ähnliche Schweißánordnung (US-A-2 827 550) ist die rohrförmige Abschirmung düsenförmig aus hochtemperaturfestem Harz gebildet, wobei deren der Bauteiloberfläche zugewandtes Ende , das als Auffangeinrichtung für aus dem Lichtbogen austretende Schweißspritzer dient, entsprechend dem Ausmaß eines thermischen Verschleißes in Richtung der Bauteiloberfläche nachzufördern ist.

Ziel der Erfindung ist es, den Verbrauch der erforderlichen Schutzgase beim MSG-Schweißen zu verringern und zugleich Verunreinigungen neben der Schweißnaht durch Schweißspritzer zu verhindern, die im Fertigungsprozeß an Sichtteilen zu verschweißender Bauteile teilweise aufwendig entfernt werden müssen.

Der Erfindung liegt daher die Aufgabe zugrunde, eine Schweißanordnung der eingangs erwähnten Art zur Verfügung zu stellen, die diesen Anforderungen gerecht wird.

Eine erfindungsgemäße Schweißanordnung ist im Anspruch 1 definiert.

Die Querschnittsgeometrie der rohrförmigen Abschirmung kann kreisrund oder oval sein oder eine andere Form aufweisen. Weiterhin können Querschnittsänderungen wie Verengungen oder Aufweitungen über die Länge der rohrförmigen Abschirmung vorgesehen sein. Die Geometrie des der Bauteiloberfläche zugewandten Endes der rohrförmigen Abschirmung ist abhängig von der Führung und Stellung des Schweißbrenners in Bezug auf die Bauteiloberfläche. So kann die Querschnittsfläche der rohrförmigen Abschirmung auch an dem der Bauteiloberfläche zugewandten Ende der rohrförmigen Abschirmung winklig zur Mittellinie des Brenners ausgerichtet sein.

Um möglichst viele Freiheitsgrade bei der Bewegung des Schweißbrenners zu gewährleisten, muß die rohrförmige Abschirmung einen verhältnismäßig geringen Durchmesser aufweisen. Bevorzugt ist die rohrförmige Abschirmung drehbeweglich gehaltert, so daß bei abgeschrägtem Ende der rohrförmigen Abschirmung die Abschrägung geeignet an die aktuelle Brennerstellung anzupassen ist.

Das beim MSG-Schweißen eingesetzte Schutzgas strömt durch die rohrförmige Abschirmung und kann somit nicht unkontrolliert in die Umgebung entweichen. Die rohrförmige Abschirmung wird dabei zugleich durch das Schutzgas gekühlt. Bevorzugt ist der der Bauteiloberfläche zugewandte Endabschnitt der rohrförmigen Abschirmung porös und gasdurchlässig ausgebildet, um das Abziehen von Schutzgas und Schweißrauch zu begünstigen. Als Werkstoff für die rohrförmige Abschirmung, die vorzugsweise als flexibler Schlauch gestaltet ist, kommen nicht leitende Materialien in Frage, um eine Beeinflussung des Lichtbogens des Schweißbrenners auszuschließen. Möglich sind hochtemperaturfeste Kunststoffe wie Teflon oder Keramik. Da die rohrförmige Abschirmung parallel zur Längsrichtung des Brennermantels gegen die Bauteiloberfläche verschiebbar gehaltert ist, kann bei thermischer Zersetzung des der Bauteiloberfläche zugewandten Endes der rohrförmigen Abschirmung deren kontinuierliche Nachförderung zur Kompensation ihres Materialsverschleißes erfolgen.

Die Ausbildung des Absaugkanals der rohrförmigen Abschirmung an deren der Bauteiloberfläche zugewandten Ende bedingt, dass der Strom des Schutzgases an der Schweißnaht von der Bauteiloberfläche weg in den Absaugkanal der rohrförmigen Abschirmung gelenkt ist.

Vorteilhafterweise kann auch zwischen dem der Bauteiloberfläche zugewandten Ende der rohrförmigen Abschirmung und der Bauteiloberfläche eine luftkissenartige Abdichtung vorgesehen sein, mittels der die den Brenner umfassende rohrförmige Abdichtung auf der Bauteiloberfläche ohne deren Beschädigung gleitend zu versetzen ist. Durch die in der rohrförmigen Abschirmung ausgebildeten Kühlkanäle kann Luft oder Wasser geleitet werden, um die thermische Zersetzung des Materials der rohrförmigen Abschirmung zu verringern.

Die erfindungsgemäße Vorrichtung sorgt für eine wirksame Verhinderung einer Verunreinigung der Bauteiloberfläche neben der Schweißnaht infolge der beim MSG-Schweißen erzeugten Schweißspritzer, so daß sich eine aufwendige Entfernung derartiger Verunreinigungen insbesondere auf Sichtteilen der Bauteiloberfläche im Fertigungsprozeß erübrigt. Zudem wird anordnung reduziert.

Bevorzugte Ausführungsformen der erfindungsgemäßen Schweißanordnung werden nun anhand der Zeichnungen erläutert. In diesen sind:
**Fig. 1** eine schematische Längsschnittansicht einer ersten Vorrichtung, die nicht die erfindungsgemäße Schweißanordnung darstellt, in Zuordnung zu einer planen Bauteiloberfläche,
**Fig. 2** eine schematische Längsschnittansicht einer zweiten Vorrichtung, die nicht die erfindungsgemäße Schweißanordnung darstellt, in Zuordnung zu einer stufenförmigen Bauteiloberfläche,
**Fig. 3** eine schematische Längsschnittsansicht einer Vorrichtung, die nicht die erfindungsgemäße Schweißanordnung darstellt, in Zuordnung zu einer planen Bauteiloberfläche und
**Fig. 4** eine schematische Längsschnittansicht einer Vorrichtung, die nicht die erfindungsgemäße Schweißanordnung darstellt, in Zuordnung zu einer planen Bauteiloberfläche.

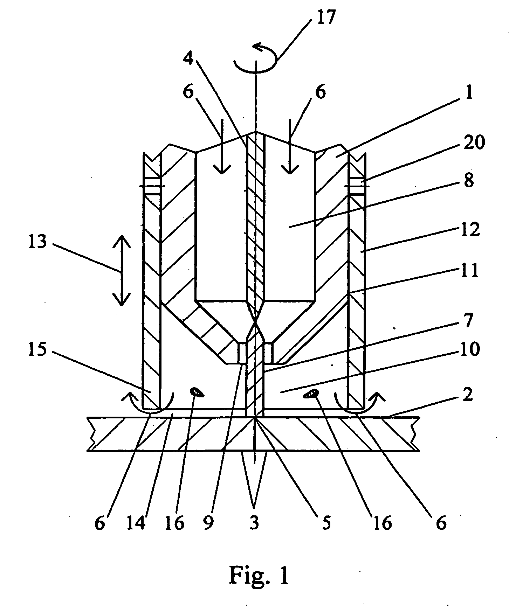

Fig. 1 zeigt einen Längsschnitt einer Vorrichtung im Verbund mit einem Schweißbrenner 1 zum MSG-Schweißen und in senkrechter Ausrichtung zu einer Bauteiloberfläche 2 zweier zu verschweißender Bauteile 3. Der Schweißbrenner 1 befindet sich im Einsatz, wie der zwischen der stromführenden Elektrode 4 des Schweißbrenners 1 und einer Schweißnaht 5 auf der Bauteiloberfläche 2 in einem Schutzgas 6 brennende Lichtbogen 7 deutlich macht. Das durch den Innenraum 8 des Schweißbrenners 1 zugeführte Schutzgas 6 strömt entlang der stromführenden Elektrode 4 und durch die Brennermündung 9 in eine Wärmeeinflußzone 10 zwischen Bauteiloberfläche 2 und Brennermündung 9 und schützt den Lichtbogen 7, die Schmelze an der Schweißnaht 5 auf der Bauteiloberfläche 2 und die Wärmeeinflußzone 10 gegen Reaktionen mit der Atmosphäre.

Wie Fig. 1 weiterhin zeigt, ist der Außenmantel 11 des Schweißbrenners 1 von einer rohrförmigen Abschirmung 12 umfaßt, die sich über die gesamte Länge des Schweißbrenners 1 erstrecken kann. Die rohrförmige Abschirmung 12 ist, wie der Doppelpfeil 13 anzeigt, parallel zur Längsrichtung des Außenmantels 11 des Schweißbrenners 1 mit einem Spiel zu diesem relativ beweglich gehaltert, erstreckt sich im Einsatz des Schweißbrenners 1 über die Brennermündung 9 hinaus bis annähernd zur Bauteiloberfläche 2 neben der Schweißnaht 5 und begrenzt mit der Bauteiloberfläche 2 einen Abzusgspalt 14, durch den beim MSG-Schweißen entstehender Schweißrauch und Schutzgas aus der Wärmeeinflußzone 10 abziehen können. Das über die Brennermündung 9 vorragende, der Bauteiloberfläche 2 zugewandte Ende 15 der rohrförmigen Abschirmung 12 bildet eine Auffangeinrichtung für Schweißspritzer 16, die beim MSG-Schweißen des Schweißbrenners 1 sozusagen als Werkstoffauspressung aus der Schmelze an der Schweißnaht 5 austreten und aus dem Lichtbogen 7 herausspritzen. Die Schweißspritzer 16 werden von der Auffangeinrichtung 15 der rohrförmigen Abschirmung 12 aufgefangen und können sich auf dieser ablagern. Verunreinigungen durch Schweißspritzer 16 auf der Bauteiloberfläche 2 im benachbarten Umfeld der Schweißnaht 5 werden somit effektiv verhindert.

Die Querschnittsgeometrie der rohrförmigen Abschirmung 12 ist beliebig gestaltbar und kann über die Länge der rohrförmigen Abschirmung 12 unterschiedlich sein. Wie der Pfeil 17 anzeigt, kann die rohrförmige Abschirmung 12 zusammen mit dem Schweißbrenner 1 drehbeweglich z.B. robotermäßig gehaltert sein. Insbesondere kann die rohrförmige Abschirmung 12 von einem flexiblen Schlauch gebildet sein, dessen Querschnittsfläche 18 am der Bauteiloberfläche 2 zugewandten Ende 15, das die Auffangeinrichtung für die Schweißspritzer 16 bildet, an die Geometrie der Bauteiloberfläche 2 anzupassen ist. Geeignet kann die rohrförmige Abschirmung 12 aus einem hochtemperaturfesten Kunststoff gebildet sein. Entsprechend dem Ausmaß des thermischen Verschleißes der Auffangeinrichtung 15 der rohrförmigen Abschirmung 12 beim MSG-Schweißen kann die parallel zum Außenmantel 11 des Schweißbrenners 1 relativ beweglich gehalterte rohrförmige Abschirmung 12 kontinuierlich in Richtung auf die Bauteiloberfläche 2 verschoben oder nachgefördert werden, so daß die Breite des Abzugsspalt 14 im wesentlichen konstant gehalten werden kann. Die Nachförderung der rohrförmigen Abschirmung 12 kann entsprechend sensorisch erfaßter Änderungen der Breite des Abzugsspaltes 14 robotermäßig erfolgen.

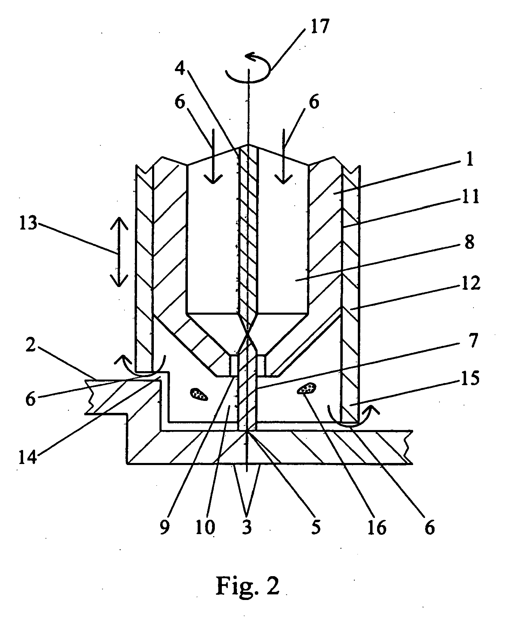

Fig. 2 zeigt eine zweite Vorrichtung im Einsatz des mittels eines nicht dargestellten Roboters geführten Schweißbrenners 1, bei der die Querschnittsfläche 18 der Auffangeinrichtung 15 der rohrförmigen Abschirmung 12 an eine stufenförmige Bauteiloberfläche 2 entsprechend angepaßt gestaltet ist. Fig. 2 zeigt weiterhin, daß zwischen dem der Bauteiloberfläche 2 zugewandten Ende 15 der rohrförmigen Abschirmung 12 und der Bauteiloberfläche 2 eine luftkissenartige Abdichtung 19 vorgesehen sein kann, um die den Schweißbrenner 1 umfassende rohrförmige Abschirmung 12 auf der Bauteiloberfläche 2 ohne deren Beschädigung zum MSG-Schweißen des Schweißbrenners 1 gleitend zu versetzen. Ferner können in der den Schutzbrenner 1 umfassenden rohrförmigen Abschirmung 12 Kühlkanäle vorgesehen sein, um die rohrförmige Abschirmung 12 beim MSG-Schweißen des Schutzbrenners 1 mittels Luft oder Wasser in herkömmlicher Weise kühlen zu können.

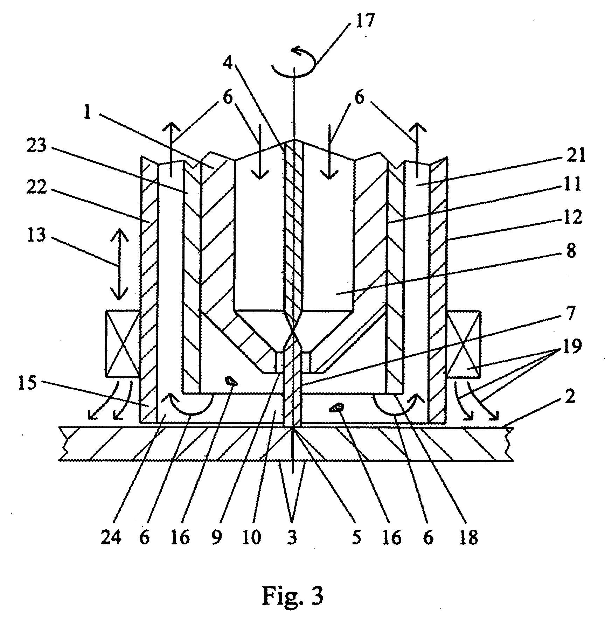

Aus Fig. 3 geht eine dritte Vorrichtung hervor, bei der die rohrförmige Abschirmung 12 doppelwandig ist und einen Absaugkanal 21 für das durch die Brennermündung 9 des Schweißbrenners 1 in die Wärmeeinflußzone 10 an der Schweißnaht 5 geströmte Schutzgas 6 bildet. Die Außenwand 22 des Absaugkanals 21 ragt - gesehen im Längsschnitt - über dessen Innenwand 23 an dem der Bauteiloberfläche 2 zugewandten Ende 15 der rohrförmigen Abschirmung 12 unter Bildung einer Einlaßöffnung 24 des Absaugkanals 21 vor, in die das Schutzgas 6 aus der Wärmeeinflußzone 10 an der Schweißnaht 5 strömungsgünstig eingesaugt und über den Absaugkanal 21 entgegengesetzt zur Strömungsrichtung im Innenraum 8 des Schweißbrenners 1 abgesaugt wird. Das abgesaugte Schutzgas 6 kann zur Verringerung des Verbrauchs über einem Kreislauf weiterer Nutzung zugeführt werden kann.

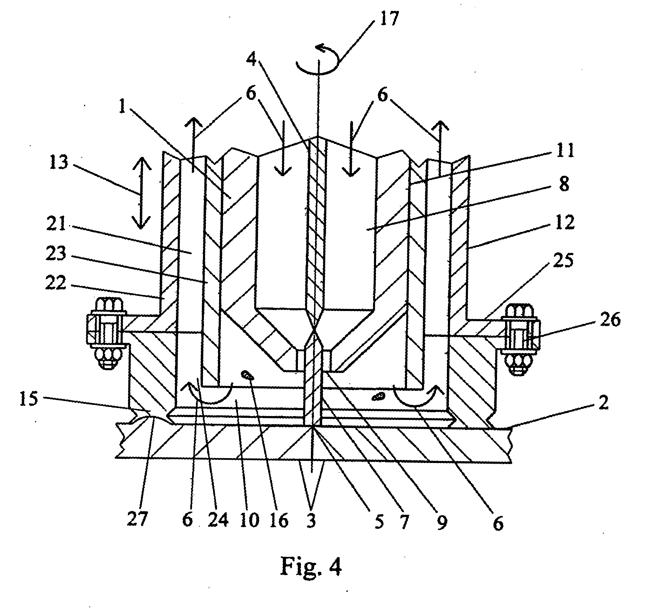

Eine Abwandlung der Ausführungsform gemäß Fig. 3 ist als vierte Vorrichtung in Fig. 4 gezeigt, bei der nur das der Bauteiloberfläche 2 zugewandte Ende 15 der rohrförmigen Abschirmung 12 als flexibler Schlauch ausgebildet ist, der an einer Halterung 25 der rohrförmigen Abschirmung 12 auswechselbar gehalten ist. Die Halterung 25 ist in Fig.4 an der Außenwand 22 des Abzugskanals 21 der rohrförmigen Abschirmung 12 mittels Schrauben 26 auswechselbar befestigt. Die der Bauteiloberfläche 2 zugewandte Querschnittsfläche 18 des flexiblen Schlauchs, der hier zugleich die Auffangeinrichtung 15 der rohrförmigen Abschirmung 12 bildet, paßt sich ausgezeichnet an Unebenheiten 27 der Bauteiloberfläche 2 an, wie Fig. 4 verdeutlicht.

### Bezugszeichenliste:

- 1: Schweißbrenner
- 2: Bauteiloberfläche
- 3: Bauteile
- 4: Elektrode
- 5: Schweißnaht
- 6: Schutzgas
- 7: Lichtbogen
- 8: Innenraum des Schweißbrenners
- 9: Brennermündung
- 10: Wärmeeinflußzone
- 11: Außenmantel des Schweißbrenners
- 12: rohrförmigen Abschirmung
- 13: Doppelpfeil
- 14: Abzugsspalt
- 15: Ende der rohrförmigen Abschirmung, Auffangeinrichttung
- 16: Schweißspritzer
- 17: Pfeil
- 18: der Bauteiloberfläche zugewandte Querschnittsfläche der rohrförmigen Abschirmung
- 19: luftkissenartige Abdichtung
- 21: Absaugkanal
- 22: Außenwand des Absaugkanals
- 23: Innenwand des Absaugkanals
- 24: Einlaßöffung des Absaugkanals
- 25: Halterung des flexiblen Schlauches
- 26: Schrauben
- 27: Unebenheiten der Bauteiloberfläche

## Patentansprüche

1. Schweißanordnung mit mindestens einem Schweißbrenner (1) zum MSG-Schweißen, mit einer von zu verschweißenden Bauteilen gebildeten Bauteiloberfläche, auf die die Brennermündung in der Einsatzstellung des Schweißbrenners (1) ausgerichtet ist, und mit einer an den Schweißbrenner (1) angepaßten Vorrichtung zum Verhindern von Verunreinigungen auf der Bauteiloberfläche (2) benachbart zu einer Schweißnaht (5) durch beim MSG-Schweißen erzeugte Schweißspritzer (16), die aus einem unter Schutzgas (6) zwischen der stromführenden Elektrode (4) des Schweißbrenners (1) und der Bauteiloberfläche (2) brennenden Lichtbogen (7) spritzen, wobei die Vorrichtung mit einer rohrförmige Abschirmung (12) aus nicht leitfähigem Material versehen ist, die den Außenmantel (11) des Schweißbrenners (1) umfaßt, parallel zur Längsrichtung des Außenmantels (11) des Schweißbrenners (1) relativ beweglich gehaltert ist und in der Einsatzstellung des Schweißbrenners (1) sich über die Brennermündung (9) hinaus in Richtung der Bauteiloberfläche (2) neben der Schweißnaht (5) erstreckt, wobei das der Bauteiloberfläche (2) zugewandten Ende (15) der rohrförmigen Abschirmung (12) eine Auffangeinrichtung für die aus dem Lichtbogen (7) austretenden Schweißspritzer (16) bildet,
**dadurch gekennzeichnet, dass**
- in der Einsatzstellung des Schweißbrenners (1) zwischen dem der Bauteiloberfläche (2) zugewandten Ende (15) der rohrförmige Abschirmung (12) und der Bauteiloberfläche (2) ein Abzugsspalt (14) für das Schutzgas (6) gegeben ist,
- die rohrförmige Abschirmung (12) doppelwandig ist und in der Einsatzstellung des Schweißbrenners (1) einen Absaugkanal (21) für das Schutzgas (6) aus der Wärmeeinflußzone (10) an der Schweißnaht (5) bildet,
- wobei - gesehen im Längschnitt - an dem der Bauteiloberfläche (2) zugewandten Ende (15) der rohrförmigen Abschirmung (2) die Außenwand (22) des Absaugkanals (21) über dessen Innenwand (23) vorragt und eine Einlaßöffnung (24) des Absaugkanals (21) zum Einströmen des Schutzgases (6) aus der Wärmeeinflußzone (10) an der Schweißnaht (5) gebildet ist, und
- dass in der rohrförmigen Abschirmung (12) Kühlkanäle ausgebildet sind.

2. Schweißanordnung nach Anspruch 1, **dadurch gekennzeichnet, daß** die Querschnittsgeometrie der rohrförmigen Abschirmung (12) über deren Länge unterschiedlich ist.

3. Schweißanordnung nach Anspruch 1 oder 2, **dadurch gekennzeichnet, daß** die rohrförmige Abschirmung (12) als flexibler Schlauch gebildet ist.

4. Schweißanordnung nach einem der Ansprüche 1 bis 3, **dadurch gekennzeichnet, daß** die rohrförmige Abschirmung (12) aus Keramik gebildet ist.

5. Schweißanordnung nach einem der Ansprüche 1 bis 3, **dadurch gekennzeichnet, daß** die rohrförmige Abschirmung (12) aus hochtemperaturfestem Kunststoff gebildet und entsprechend dem Ausmaß eines thermischen Verschleißes an ihrem der Bauteiloberfläche (2) zugewandten Ende (15) kontinuierlich in Richtung auf die Bauteiloberfläche (2) nachzufördern ist.

6. Schweißanordnung nach einem der Ansprüche 1 bis 5, **dadurch gekennzeichnet, daß** zwischen dem der Bauteiloberfläche (2) zugewandten Ende (15) der rohrförmigen Abschirmung (12) und der Bauteiloberfläche (2) eine luftkissenartige Abdichtung (19) vorgesehen ist, mittels der die den Schweißbrenner (1) umfassende rohrförmige Abschirmung (12) auf der Bauteiloberfläche (2) ohne deren Beschädigung gleitend zu versetzen ist.

## Claims

1. A weld arrangement comprising at least one welding torch (1) for MSG welding, with a component surface that is formed by components that are to be welded, to which component surface the burner nozzle is aligned in the operational position of the welding torch (1), and comprising a device, adapted to the welding torch (1), for the purpose of avoiding impurities on the component surface (2) adjacent to a weld seam (5) as a result of weld spatter (16) generated during MSG welding, which impurities emanate from an arc (7) that is generated in an inert gas (6) atmosphere between the current-carrying electrode (4) of the welding torch (1) and the component surface (2), wherein the device comprises a tubular shield (12) made of a nonconductive material, which shield (12) comprises the outer shell (11) of the welding torch (1), is held so as to be relatively movable parallel to the longitudinal direction of the outer shell (11) of the welding torch (1), and in the operational position of the welding torch (1) extends beyond the burner nozzle (9) in the direction of the component surface (2) beside the weld seam (5), wherein the end (15) of the tubular shield (12) which end faces the component surface (2) forms a collecting device for collecting the weld spatter (16) emanating from the arc (7),
**characterised in that**
- in the operational position of the welding torch (1) there is an extraction gap (14) for the inert gas (6) between the end (15) of the tubular shield (12) which end faces the component surface (2) and the component surface (2);
- the tubular shield (12) is double walled and in the operational position of the welding torch (1) forms a suction channel (21) for the inert gas (6) from the heat affected zone (10) on the weld seam (5);
- wherein, viewed in longitudinal section, on the end (15) of the tubular shield (12) which end faces the component surface (2) the outer wall (22) of the suction channel (21) protrudes beyond the internal wall (23) of said suction channel (21), and an inlet aperture (24) of the suction channel (21) for the inflow of the inert gas (6) from the heat affected zone (10) is formed on the weld seam (5); and
- the tubular shield (12) comprises coolant channels.

2. The weld arrangement according to claim 1, **characterised in that** the cross-sectional geometry of the tubular shield (12) varies along its length.

3. The weld arrangement according to claim 1 or 2, **characterised in that** the tubular shield (12) is designed as a flexible hose.

4. The weld arrangement according to any one of claims 1 to 3, **characterised in that** the tubular shield (12) is made from ceramics.

5. The weld arrangement according to any one of claims 1 to 3, **characterised in that** the tubular shield (12) comprises high-temperature-resistant plastic, and is to be continuously resupplied in the direction of the component surface (2) depending on the extent of thermal wear on its end (15) that faces the component surface (2).

6. The weld arrangement according to any one of claims 1 to 5, **characterised in that** an air-cushion-like seal (19) is provided between the end (15) of the tubular shield (12) which end faces the component surface (2) and the component surface (2), by means of which seal (19) the tubular shield (12) that encloses the welding torch (1) is to be slidably dislocated on the component surface (2) without causing any damage to said component surface (2).

## Revendications

1. Dispositif de soudure comportant au moins un chalumeau (1) à des fins de soudure MSG (soudure à l'arc sous protection gazeuse avec métal d'apport), comportant une surface de composant formée par les composants à souder, sur laquelle l'orifice de sortie du brûleur est orientée dans la position d'utilisation du chalumeau (1), et comportant un dispositif adapté au chalumeau (1) pour empêcher des impuretés sur la surface de composant (2) à proximité d'un point de soudure (5) résultant des éclats de soudure (16) produit par la soudure MSG, qui jaillissent hors d'un arc électrique (7) brûlant sous gaz de protection (6) entre l'électrode conductrice de courant (4) du chalumeau (1) et la surface de composant (2), moyennant quoi le dispositif est pourvu d'un écran de protection tubulaire (12) constitué d'un matériau non conducteur, qui englobe la gaine extérieure (11) du chalumeau (1), est maintenu de manière mobile parallèlement à la direction longitudinale de la gaine extérieure (11) du chalumeau (1) et s'étend dans la position d'utilisation du chalumeau (1) par-dessus l'orifice de sortie du brûleur (9) dans la direction de la surface de composant (2) à côté du point de soudure (5), moyennant quoi l'extrémité (15) de l'écran de protection tubulaire (12) tournée vers la surface de composant (2) forme un dispositif de captage des éclats de soudure (16) jaillissant hors de l'arc électrique (7),
**caractérisé en ce que**
- dans la position d'utilisation du chalumeau (1) entre l'extrémité (15) tournée vers la surface de composant (2) de l'écran de protection tubulaire (12) et la surface de composant (2) un interstice de soutirage (14) du gaz de protection (6) est réalisé,
- l'écran de protection tubulaire (12) est à double paroi et forme dans la position d'utilisation du chalumeau (1) un canal d'aspiration (21) du gaz de protection (6) sortant de la zone d'influence thermique (10) sur le point de soudure (5),
- dans lequel -vue en coupe longitudinale- à l'extrémité (15) tournée vers la surface de composant (2) de l'écran de protection tubulaire (12), la paroi extérieure (22) du canal d'aspiration (21) dépasse par-dessus la paroi intérieure (23) de celui-ci et une ouverture d'admission (24) du canal d'aspiration (21) est formée à des fins d'écoulement du gaz de protection (6) hors de la zone d'influence thermique (10) sur le point de soudure (5), et
- dans l'écran de protection tubulaire (12), des canaux de refroidissement sont réalisés.

2. Dispositif de soudure selon la revendication 1, **caractérisé en ce que** la géométrie de la section transversale de l'écran de protection tubulaire (12) est différente sur la longueur de celui-ci.

3. Dispositif de soudure selon la revendication 1 ou 2, **caractérisé en ce que** l'écran de protection tubulaire (12) est conçu comme un tuyau flexible.

4. Dispositif de soudure selon une des revendications 1 à 3, **caractérisé en ce que** l'écran de protection tubulaire (12) est formé en céramique.

5. Dispositif de soudure selon une des revendications 1 à 3, **caractérisé en ce que** l'écran de protection tubulaire (12) est formé en plastique résistant aux températures élevées et est transporté en continu sur la surface de composant (2) de manière correspondante à un degré d'usure thermique sur son extrémité (15) tournée vers la surface de composant (2).

6. Dispositif de soudure selon une des revendications 1 à 5, **caractérisé en ce que** entre l'extrémité (15) tournée vers la surface de composant (2) de l'écran de protection tubulaire (12) et la surface du composant (2), une étanchéité (19) de type coussin d'air est prévue, au moyen de laquelle l'écran de protection (12) tubulaire englobant le chalumeau (1) peut être déplacé de manière coulissante sur la surface de composant (2) sans endommager celui-ci.
